# EUROPEAN PATENT SPECIFICATION

(11) **EP 3 812 608 B1**
(45) Date of publication and mention of the grant of the patent: **12.07.2023**
(21) Application number: 19205124.1
(22) Date of filing: 24.10.2019
(51) Int. Cl.: F16F 1/38

(54) **MOUNT AND METHOD FOR ASSEMBLING A MOUNT**
HALTERUNG UND VERFAHREN ZUR MONTAGE EINER HALTERUNG
SUPPORT ET PROCÉDÉ D'ASSEMBLAGE D'UN SUPPORT

(43) Date of publication of application: 28.04.2021
(73) Proprietor: Vibracoustic Nantes SAS, 44470 Carquefou (FR)
(72) Inventor: Geslain, Antoine, 44300 Nantes (FR); Kieffer, Jerome, 44300 Nantes (FR)
(74) Representative: Patentanwälte Olbricht Buchhold Keulertz

(56) References cited:
- EP-A1- 0 487 891
- EP-A2- 1 978 274
- DE-A1- 19 613 212
- DE-A1- 19 833 537

## Description

The invention relates to a mount for supporting a suspension on a chassis. The mount includes a core, a sleeve and a resilient body, wherein the body is fixed to the core and to the sleeve. Furthermore, the invention refers to a method for assembling a mount, wherein the mount includes a core, a sleeve and a resilient body.

Resilient mounts for supporting a suspension on a chassis are known in the prior art. Such mounts are often called elastomeric mounts or bushings and may be used for other purposes. Such commonly known mounts include a core into which a support bar such as a bolt can be inserted. This support bar may be fixed to the chassis. The suspension includes a cylindrical clamp in which a sleeve of the resilient mount can be inserted. To couple the suspension to the chassis and to dampen vibrations acting on the suspension, the sleeve is connected to the core by a resilient body made for example from an elastomeric material. An example of a mount is described in DE 10 2009 041 549 B4.

Depending on the purpose and the field of application, commonly known mounts have various damping capabilities and stiffness settings. This results in various configurations of the resilient body.

For example, DE 10 2009 041 549 B4 discloses mount for supporting a suspension on a chassis, the mount an inner core and an outer sleeve disposed concentrically with one another, and connected to each other by an elastomer layer.

Document DE19833537 is considered as the closest prior art and discloses the preamble of claim 1.

The objective of the present invention is to provide a mount and a method for assembling a mount which has improved damping capabilities and/or stiffness settings.

The objective is solved by the mount according to claim 1 and by the method according to claim 13. The dependent claims define preferred embodiments of the invention.

A mount for supporting a suspension on a chassis comprises a first part including a first core, at first sleeve and a resilient first body as well as a second part including a second core, a second sleeve and a resilient second body. The first core includes a first core protrusion extending radially outward form the first core. The first sleeve includes a first sleeve protrusion extending radially inward from the first sleeve. A radially most inward part of the first sleeve protrusion is positioned closer to the first core than a radially most outward part of the first core protrusion. The first body is fixed to the first core protrusion and to the first sleeve protrusion for providing a spring in an axial direction of the mount. The second body is fixed to the second core and to the second sleeve. This second sleeve is, preferably completely, inserted into the first sleeve such that an outer surface of the second sleeve is in contact with an inner surface of the first sleeve.

The resilient first body is arranged in the axial direction between the first sleeve protrusion and the first core protrusion. In this way, the resilient first body acts as a cushion or resilient stopper in the axial direction. Thus, under axial loads, it is subjected to significant compressive and tensile strains rather than shear strains. Thus, the mount according to the invention exhibits a high axial stiffness.

A further advantage of the invention is that the stiffness, particularly in the axial direction, can be easily tuned by changing the shape and dimensions of the first core protrusion and the first sleeve protrusion. In particular, the stiffness of the mount is mainly set by changing the shape and dimensions of the respective protrusions while the damping capabilities are mainly set by changing the material of the first body. In the mount according to the invention, both the stiffness settings as well as the damping capabilities can be easily set to the desired requirements.

The mount according to the invention exhibits a two-part structure, namely it is made of the first part and the second part. By means of the two-part structure, it is possible to provide a mount having the above mentioned high axial stiffness while the mount can still be pre-assembled. It is thus possible that the mount is assembled and transported to the location where the mount is fixed for example to the chassis and the suspension.

The mount as described above is preferably provided for attaching a suspension to a chassis. However, the mount can in principle be used for attaching other components to each other. Preferably, the field of application refers to vehicles.

The suspension may have a cylindrical clamp or sleeve in which the mount is inserted. The mount may be held in the cylindrical clamp or sleeve of the suspension by means of press-fitting the mount into the cylindrical clamp or sleeve. However, it is also possible that the mount is held in the suspension in a form-locking manner. The clamp or sleeve of the suspension may include a cylindrical inner surface, in particular a cylindrical inner surface. The clamp or sleeve of the suspension preferably does not exhibit protrusions or recesses on its inner surface. The clamp or sleeve may also be a through-hole in the suspension.

The chassis may be any part of a vehicle which is capable of carrying loads. In particular, the chassis is that part of a vehicle as commonly understood by a person skilled in the art. The mount may be fixed to the suspension by means of a support bar. The support bar may extend through a through-hole arranged in the first core and/or the second core.

The mount preferably exhibits a two-part structure. In particular, the mount solely includes the first part and the second part. However, it is possible that further components are provided with the mount except the first part and the second part, for example a stopper and a support bar as discussed in the following. Preferably, the mount is a pre-assembled component which means that the mount in its assembled state needs solely be attached to the suspension and the chassis without altering and/or adding components of the mount. This means it is possible to assemble the mount and ship it to the location at which the mount is attached to the suspension and/or the chassis.

The first part and/or the second part may only include the respective core, the respective sleeve and the respective body. The first sleeve and/or the second sleeve may exhibit an outer surface which is free from protrusions and/or recesses except for the first sleeve protrusion and the second sleeve protrusion, respectively. In particular, the first sleeve and/or the second sleeve may include a cylindrical outer surface, optionally a circular cylindrical outer surface. Similarly, the first sleeve and/or the second sleeve may exhibit an inner surface which is free from protrusions and recesses except for the first sleeve protrusion and/or the second sleeve protrusion, respectively. In particular, the first sleeve and/or the second sleeve may include a cylindrical inner surface, optionally a circular cylindrical inner surface. When viewed in the axial and circumferential direction, the inner and/or outer surfaces of the first and/or second sleeves may be flat, i.e. free of protrusions and recesses.

The mount may be attached to the suspension by means of the outer surface of the first sleeve. In particular, the mount is solely in contact with the suspension via the first sleeve, in particular its outer surface. The outer surface of the first sleeve and the inner surface of the clamp of the suspension may exhibit mating surfaces such that it is possible that the mount is pressfit into the clamp of the suspension.

A portion of an inner surface of the first sleeve includes an inner diameter or dimension in the radial direction which is equal to or greater than an outer diameter or dimension in the radial direction of a portion of an outer surface of the second sleeve. In particular, a portion of the inner surface of the first sleeve and a portion of the outer surface of the second sleeve exhibit mating surfaces such that the second sleeve may be held in the first sleeve by means of press-fitting. Thus, the second sleeve may be held in the first sleeve by a friction-type connection. The forces for the friction-type connection may be generated by the resilience of the first sleeve and/or the second sleeve. It is also possible that the first and/or second resilient body contribute to a radial force which facilitates the friction-type connection between the first sleeve and the second sleeve.

The first sleeve and/or the second sleeve may be manufactured from a metal material such as aluminium or from a plastic material, such as polyamide, potentially reinforced with glass fibers.

The second sleeve is inserted into the first sleeve preferably such that the second sleeve is completely inserted into the first sleeve. This means that, in the assembled state, the second sleeve does not protrude from the first sleeve in the axial direction.

The first core and/or the second core may include a through-hole into which a support bar may be inserted. The support bar, the through-hole of the first core and/or the second core, and/or the longitudinal axes of the first sleeve and/or the second sleeve define the axial direction. The support bar, the first core, the second core, the first sleeve and/or the second sleeve may be arranged coaxially. The radial direction is perpendicular to the axial direction while the circumferential direction extends around the axial direction.

The first core and/or the second core are arranged, at least partially, inside the first sleeve and/or the second sleeve, respectively. The first core includes a first outer core surface which is facing the first sleeve. The first core protrusion is arranged on the first outer core surface, preferably at an axial end of the first core. The first outer core surface may be a cylindrical surface, preferably having a circular cross-section. The second core includes a second outer core surface which is facing the second sleeve. The second core protrusion is arranged on the second outer core surface, preferably at an axial end of the second core. The second outer core surface may be a cylindrical surface, preferably having a circular cross-section. The first outer core surface may have a diameter or dimension in the radial direction which is greater than or equal to the diameter or dimension in the radial direction of the second outer core surface.

The first sleeve protrusion may be a unitary piece with the first sleeve. The first sleeve protrusion is preferably arranged at an axial end of the first sleeve. The first sleeve protrusion can be configured and/or shaped such that it is capable of carrying the axial load itself.

The first sleeve protrusion protrudes from the first sleeve in the radial direction, in particular radially inward. The first sleeve protrusion may exhibit a first sleeve abutment surface which faces the first core protrusion. The first sleeve abutment surface may extend generally in the radial direction but can also be inclined to the radial direction by up to 5°, 10°, 15°, 30°, 45° or 60°. The first sleeve abutment surface may exhibit a flat shape. The first body is preferably attached to the first sleeve abutment surface. In particular, the first sleeve abutment surface is that portion of the surface of the first sleeve protrusion that is in contact with the first body.

The first sleeve protrusion preferably extends around the whole circumferential direction; the first sleeve protrusion may be an annular protrusion. However, it is possible that the first sleeve protrusion includes segments which are spaced apart in the circumferential direction. The first sleeve abutment surface is in this case distributed over the segments of the first sleeve protrusion.

The first core protrusion may be a unitary piece with the first core. The first core protrusion is preferably arranged at an axial end of the first core, in particular at that end of the first core that does not overlap with the first sleeve. The first core protrusion can be configured and/or shaped such that it is capable of carrying the axial load itself or the first core protrusion may act as a component supporting the first body and transferring the axial load from the mount to the chassis. In the latter case, the first core protrusion does not need to be shaped and/or designed to bear the axle load itself.

The first core protrusion protrudes from the first core in the radial direction, in particular radially outward. The first core protrusion may exhibit a first core abutment surface which faces the first sleeve protrusion, in particular the first sleeve abutment surface. The first core abutment surface may extend generally in the radial direction but can also be inclined to the radial direction by up to 5°, 10°, 15°, 30° or 45°. Preferably, the first core abutment surface and the first sleeve abutment surface extend, at least partially, parallel to each other. The first core abutment surface may exhibit a flat shape. The first body is preferably attached to the first core abutment surface. In particular, the first core abutment surface is that portion of the surface of the first core protrusion that is in contact with the first body.

The first core protrusion preferably extends around the whole circumferential direction; the first core protrusion may be an annular protrusion. However, it is possible that the first core protrusion includes segments which are spaced apart in the circumferential direction. The first core abutment surface is in this case distributed over the segments of the first core protrusion.

The first core protrusion extends in the radial direction to such an extent that the first core protrusion overlaps with the first sleeve protrusion in the radial direction. This is achieved in that the radially most outward part of the first core protrusion is positioned closer to the first sleeve in the radial direction than the radially most inward part of the first sleeve protrusion. As viewed in the radial direction, the first sleeve protrusion and the first core protrusion overlap over a certain extension. Similarly, as viewed in the axial direction, the first core protrusion covers a part of the first sleeve protrusion. In other words, a line extending parallel to the axial direction cuts both the first core protrusion and the first sleeve protrusion. In particular, a plurality of lines all extending parallel to the axial direction cuts both the first core protrusion and the first sleeve protrusion.

As discussed above, the resilient first body is fixed to the first core abutment surface and the first sleeve abutment surface. Due to the above described arrangement of the first core protrusion and the first sleeve protrusion, a portion of the first body extends in the axial direction. Thus, the line or the plurality of lines extending parallel to the axial direction cut the first sleeve protrusion, the first body and the first core protrusion, preferably in this order. Due to this arrangement, the first body provides a spring or resilient cushion in the axial direction such that the mount exhibits high axial stiffness. The distance between the first core abutment surface and the first sleeve abutment surface as well as the radial and circumferential extension of the first core protrusion and first sleeve protrusion may all be parameters for setting the axial stiffness. The first body may be made from a rubber material or elastomeric material.

The first body may be vulcanized to the first core protrusion and/or the first sleeve protrusion. It is also possible that the first body is fixed to the first core protrusion and/or the first sleeve protrusion by means of adhesion. In any case, the first part including the first core, the first sleeve and the first body is a unitary piece in that all the components of the first part are permanently fixed to each other.

The second body may be vulcanized to the second core and/or the second sleeve. It is also possible that the second body is fixed to the second core and/or the second sleeve by means of adhesion. In any case, the second part including the second core, the second sleeve and the second body is a unitary piece in that all the components of the second part are permanently fixed to each other.

It is preferred that the second core includes a second core protrusion extending radially outward from the second core, wherein the second sleeve includes a second sleeve protrusion extending radially inward from the second sleeve, and wherein a radially most inward part of the second sleeve protrusion is positioned closer to the second core than a radially most outward part of the second core protrusion. Preferably, a radially most inward part of the first sleeve protrusion is positioned closer to the first core than a radially most outward part of the second core protrusion.

The second sleeve protrusion may be a unitary piece with the second sleeve. The second sleeve protrusion is preferable arranged at an axial end of the second sleeve. The first sleeve protrusion and the second sleeve protrusion are preferably arranged at opposing ends of the mount, i.e. the end of the first sleeve which does not include the first sleeve protrusion is arranged closer to that end of the second sleeve which includes the second sleeve protrusion. The second sleeve protrusion can be configured and/or shaped such that it is capable of carrying the axial load itself.

The second sleeve protrusion protrudes from the second sleeve in the radial direction, in particular radially inward. The second sleeve protrusion may exhibit a second sleeve abutment surface which faces the second core protrusion. The second sleeve abutment surface may extend generally in the radial direction but can also be inclined to the radial direction. The second sleeve abutment surface may exhibit a flat shape. The second body is preferably attached to the second sleeve abutment surface. In particular, the second sleeve abutment surface is that portion of the surface of the second sleeve protrusion that is in contact with the second body.

The second sleeve protrusion preferably extends around the whole circumferential direction; the second sleeve protrusion may be an annular protrusion. However, it is possible that the second sleeve protrusion includes segments which are spaced apart in the circumferential direction. The second sleeve abutment surface is in this case distributed over the segments of the first sleeve protrusion.

The second core protrusion may be a unitary piece with the second core. The second core protrusion is preferably arranged at an axial end of the second core, in particular at that end of the first core that does not overlap with the first sleeve. In particular, the first core protrusion and the second core protrusion are arranged at opposing axial ends of the mount. The second core protrusion can be configured and/or shaped such that it is capable of carrying the axial load itself or the second core protrusion may act as a component supporting the second body and transferring the axial load from the mount to the chassis. In the latter case, the second core protrusion does not need to be shaped and/or designed to bear the axle load itself.

The second core protrusion protrudes from the second core in the radial direction, in particular radially outward. The second core protrusion may exhibit a second core abutment surface which faces the second sleeve protrusion, in particular the second sleeve abutment surface. The second core abutment surface may extend generally in the radial direction but can also be inclined to the radial direction. Preferably, the second core abutment surface and the second sleeve abutment surface extend, at least partially, parallel to each other. The second core abutment surface may exhibit a flat shape. The second body is preferably attached to the second core abutment surface. In particular, the second core abutment surface is that portion of the surface of the second core protrusion that is in contact with the first body.

The second core protrusion preferably extends around the whole circumferential direction; the first core protrusion may be an annular protrusion. However, it is possible that the second core protrusion includes segments which are spaced apart in the circumferential direction. The second core abutment surface is in this case distributed over the segments of the second core protrusion.

The second core protrusion extends in the radial direction to such an extent that the second core protrusion overlaps with the second sleeve protrusion in the radial direction. This is achieved in that the radially most outward part of the second core protrusion is positioned closer to the second sleeve in the radial direction than the radially most inward part of the second sleeve protrusion. As viewed in the radial direction, the second sleeve protrusion and the second core protrusion overlap over a certain extension. Similarly, as viewed in the axial direction, the second core protrusion covers a part of the second sleeve protrusion. In other words, a line extending parallel to the axial direction cuts both the second core protrusion and the second sleeve protrusion. In particular, a plurality of lines all extending parallel to the axial direction cuts both the first core protrusion and the first sleeve protrusion.

As discussed above, the resilient second body is fixed to the second core abutment surface and the second sleeve abutment surface. Due to the arrangement of the second core protrusion and the second sleeve protrusion, a portion of the second body extends in the axial direction. Thus, the line or the plurality of lines extending parallel to the axial direction cut the second sleeve protrusion, the second body and the second core protrusion, preferably in this order. Due to this arrangement, the second body provides a spring or resilient cushion in the axial direction such that the mount exhibits high axial stiffness. The distance between the second core abutment surface and the second sleeve abutment surface as well as the radial and circumferential extension of the second core protrusion and second sleeve protrusion may all be parameters for setting the axial stiffness. The second body may be made from a rubber material or elastomeric material.

The second body may be vulcanized to the second core protrusion and/or the second sleeve protrusion. It is also possible that the second body is fixed to the second core protrusion and/or the second sleeve protrusion by means of adhesion. In any case, the second part including the second core, the second sleeve and the second body is a unitary piece in that all the components of the second part are permanently fixed to each other.

Preferably, the first body and/or the second body are annular members which seal the gap between the first sleeve and the first core as well as the second sleeve and the second core, respectively. Thus, in the assembled state of the mount, there can be a cavity inside the mount which is surrounded by the first core, the second core, the first sleeve, the second sleeve, the first body and the second body. In particular, this cavity is sealed by the above mentioned components from the surrounding such that no dirt or other particles can enter the cavity.

In a preferred embodiment, the first core protrusion, the second core protrusion, the first sleeve protrusion and the second sleeve protrusion all overlap in the radial direction. Thus, the line or the plurality of lines cut the first core protrusion, the first body, the first sleeve protrusion, the second sleeve protrusion, the second body and the second core protrusion, preferably in this order. Due to the overlap of the protrusions and the bodies, the mount exhibits high axial stiffness and axial loads can be reliably transferred and damped in the axial direction.

It is preferred that the second body includes a second axial body and a second radial body. Preferably, the second axial body is fixed to the second core protrusion and to the second sleeve protrusion for providing a spring in the axial direction. In one embodiment, the second radial body is fixed to an outer surface of the second core and an inner surface of the second sleeve for providing a spring in the radial direction.

The second body includes a first portion mainly effective in the axial direction, the second axial body, and a second portion mainly effective in the radial direction, the second radial body; unlike the first body which is mainly effective in the axial direction. In that sense, the second axial body constitutes, like the first body, a resilient cushion or spring effective in the axial direction. The second axial body is preferably fixed to and between the second core abutment surface and the second sleeve abutment surface.

The second radial body constitutes a resilient cushion or spring which is mainly effective in the radial direction. The second radial body and the second axial body may be a unitary component however it is possible that the two bodies are separated from each other, preferably in the axial direction. The second radial body is preferably fixed to the cylindrical outer surface of the second core and to the cylindrical inner surface of the second sleeve. The configuration of the second body as having a second axial body and a second radial body allows to separate the radial and axial damping of the mount.

It is preferred that the mount includes a support bar axially protruding from the first core and the second core. Preferably, the first core and/or the second core are pressfit onto the support bar.

The support bar is that component with which the mount is fixed to the chassis. Thus, any elongated component may be considered the support bar. The support bar protrudes from the first core and the second core since the support bar is fixed to the chassis at the axial ends thereof. The support bar may be fixed to the chassis by means of bolts; the support bar may include through-holes at the axial ends through which the bolts or any other fastening elements may be inserted into. However, the support part may also be fixed to the chassis by means of clamping.

The support bar can be attached to the core by various means, for example by clamping the first core and second core between nuts arranged to the support. However, it is preferred that the first core and/or the second core are pressfit onto the support bar. This allows to end up with a mount which is completely pre-assembled since all components of the mount are attached to each other. The support bar extends in the axial direction. The support bar is inserted into through-holes arranged in the first core and the second core.

It is preferred that the support bar has in a cross-sectional view, a width and a length wherein the length is greater than the width. Preferably, the support bar includes an embossment. In a preferred embodiment, the embossment extends in the axial direction.

Basically, in a cross-sectional view, the support bar has a dimension in one direction which is greater than the dimension in another direction. For example, a shape surrounding the support bar in a cross-sectional view may be a rectangle or an ellipsis. The support part may have a flat configuration in contrast to a circular shape in a cross-sectional view such as bolts used in the prior art. This flat configuration allows to easily include a through-hole for the insertion of bolts or other fastening elements for attaching the support bar to the chassis.

The flat configuration of the tie blade allows a manufacturing process by stamping and/or embossing a metal material. This reduces the costs for production of the tie blade. As such, in a preferred embodiment, the tie blade is a stamped and/or embossed metal component.

The support bar preferably includes the embossment for increasing the strength of the support bar. The embossment may be configured as a stiffening corrugation or reinforcing fin. In particular, the embossment is provided on that side of the support bar which covers the greater area compared to another side, for example the embossment is arranged on the wider side of a rectangular support bar in a cross-sectional view. The embossment may result in a shape in a cross-sectional view which deviates from a rectangle or ellipsis.

The width in a cross-sectional view may be the distance which is perpendicular to the surface at the particular point of measurement. The width may vary along the extension in the direction of length. The length is measured along the extension of the support bar and, thus, may vary form a straight line.

It is preferred that the embossment extends in the axial direction which corresponds with the axial direction of the mount. Preferably, the extension of the embossment in the axial direction is longer than the extension of the first core and the second core in the axial direction such that the embossment protrudes from both the first core and the second core in the axial direction.

It is preferred that the first core and/or the second core include a first section made from the first material and a second section made from a second material. Preferably, the first section is in contact with the support bar.

The first section may extend completely along the circumferential direction such that only the first section is in contact with the support bar. The first material is preferably metal, in particular aluminum. In general, the first material is a material which is plastically deformable to allow pressfitting the first core and/or the second core to support bar. The second material is preferably plastic, for example polyamide potentially reinforced with glass fibers. The second section preferably extends completely along the circumferential direction over the first section such that the outer surface of the first core and/or the second core is constituted by the second section. In particular, the first core protrusion and/or the second core protrusion are part of the second section.

The first section and the second section may be securely fixed to each other, in particular with regard to loads acting in the axial direction, by means of interlocking. For example, the first section and the second section exhibit grooves and tongues, which may extend in the circumferential direction. The tongues arranged at one of the first section and the second section extend into the grooves arranged at the other of the first section and the second section. For example, the outer surface of the first section includes the grooves while the second section is molded onto the first section such that the grooves are filled by the material of the second section.

It is preferred that the first sleeve includes a first portion having a first inner diameter and a second portion axially separated from the first portion having a second inner diameter which is smaller than the first diameter. Preferably, the outer surface of the second sleeve is in contact solely with the first portion. In a preferred embodiment, the first portion and second portion are separated by an edge, wherein the second sleeve axially abuts against the edge.

The first portion and the second portion of the first sleeve refer to sections of the first sleeve in the axial direction. The first inner diameter and/or the second inner diameter refer to the maximum extension in the radial direction of the respective portions. In case that the first portion and/or the second portion have a circular cylindrical inner surface, the first inner diameter and/or the second inner diameter correspond to the diameter in a mathematical sense. If however the inner surface of the first portion and/or of the second portion deviates from a circular cylindrical surface, the first inner diameter and/or the second inner diameter corresponds to the longest extension in the radial direction.

The transition between the first portion and the second portion may be gradually or stepwise. The first inner diameter and the second inner diameter are preferably constant along the first portion and the second portion, respectively, in the axial direction.

The outer surface of the second sleeve preferably has a diameter which is equal to the first inner diameter; in a state, in which the second sleeve is not inserted into the first sleeve, the outer diameter of the second sleeve can be greater than the inner diameter of the first sleeve. Thus, the outer surface of the second sleeve is in contact with the first sleeve over the complete first portion. In case of a stepwise transition between the first portion and the second portion, the edge is provided at the inner surface of the first sleeve. The axial end of the second sleeve which is inserted into the first sleeve axially may abut against the edge. Due to the difference in the first inner diameter and the second inner diameter, in particular by the provision of the edge, the second sleeve can be reliably positioned into the first sleeve as the ideal position is reached once the second sleeve can no longer be inserted into the first sleeve as the inner diameter of the first sleeve is reduced at the second portion. Furthermore, axial loads can be transmitted in the axial direction by the provision of the edge.

It is preferred that the second radial body includes a first material portion and a second material portion wherein the first material portion and the second material portion are made from different materials.

The first material portion is preferably arranged in one radial extension while the second material portion is arranged in another radial extension wherein preferably the two radial extensions are perpendicular to each other. The two materials from which the first and second material portions are made of allow to set different damping capabilities in the respective radial extensions. Thus, the mount exhibits different damping characteristics in the respective extensions.

The second radial body and/or the second axial body may include at least one, preferably two, sets of arms wherein the arms of each set extended in one radial direction. For example, the two arms of a set are arranged on opposing sides of the second core. If only one set of arms is provided, the mount exhibits significantly different stiffness settings in a direction parallel with the extension of the set of arms and perpendicular thereto.

Each set of arms may be made from a different material, for example, a first set of arms corresponds to the first material portion while a second set of arms corresponds to the second material. The arms may be separated by gaps or voids in the circumferential direction such that the arms are not in contact with each other. However, it is also possible that the arms are in contact which each other such that the second radial body and/or the second axial body extend completely in the circumferential direction while it is possible that the type of material changes along the circumferential direction.

It is preferred that the mount includes a stopper which is arranged on the first core and/or the second core. Preferably the stopper includes a base portion circumferentially extending around the first core and/or the second core and at least one arm portion axially extending from the base portion into a void arranged in the second radial body. In a potential embodiment, the stopper includes a rubber coating.

The stopper may be arranged solely on the first core, solely on the second core or both on the first core and second core. The stopper preferably includes a base portion circumferentially extending around the first core and/or second core. The stopper may be positioned on the first core and/or the second core by firstly sliding the stopper on the first core and the second core and, subsequently, inserting the second sleeve into the first sleeve which results in that the first core abuts against the second core (the other core is thereby inserted into the stopper).

The stopper is limiting the displacement of the core with respect to the sleeve in the radial direction. Basically, the first sleeve and/or the second sleeve abut against the stopper upon a deviation of the first sleeve and/or the second sleeve over a certain amount in the radial direction. The stopper therefore helps to avoid a too strong compression of the second radial body and a too high degree of deformation of the first body and the second axial body.

The at least one arm portion extends in the axial direction from the base portion. Preferably, two or more arm portions are provided. It is possible that an arm portion is inserted into a void or gap between the arms of the second radial body. The insertion of the arm portion into the void or gap of the second radial body prevents a rotation and/or an axial movement of the stopper on the first core and/or the second core.

The stopper can be made from a plastic material such as polyamide, potentially reinforced with glass fibers. In order to avoid movement of the stopper on the first core and/or the second core in the axial direction, the core can be completely or partially coated with a rubber material. The rubber material may be any material that is resilient and increases the friction such that axial or rotational movements of the stopper in relation to the first core and/or the second core can be prevented or minimized. Furthermore, the inner diameter of the stopper and the outer diameter of the first core and/or the second core may be set such that the rubber coating is compressed upon arranging the stopper on the first core and/or the second core. This helps to increase the frictional force.

It is preferred that the first core and/or the second core form a stop edge for preventing the stopper from moving in the axial direction. Preferably, the stop edge is constituted by different outer diameters of the first core and the second core or the stop edge is constituted by a groove axially and circumferentially extending on the first core and/or the second core. Preferably, this groove is located within the rubber coating of the contact area of the stopper and the first core and/or the second core.

At least one stop edge can be provided for preventing the stopper from moving in the axial direction. It is possible that the stop edges are provided such that the stopper can be prevented from moving in opposite axial directions. The stop edge or the stop edges can be arranged solely on the first core, solely on the second core or both on the first core as well as the second core. The stop edge may be formed as a projection arranged on the first core and/or the second core. The stop edge may be a circumferentially extending annular projection. However, it is also possible that the stop edge includes one or more protrusions which are distributed along the circumferential direction.

In a preferred embodiment, the stop edge is constituted in that the core on which the stopper is arranged has an outer diameter that is smaller than the outer diameter of the respective other core on which the stopper is not arranged. The outer diameter refers to the maximum extension of the first core and the second core along the radial direction. In this way, if the stopper is arranged on the second core, the outer diameter of the first core prevents the stopper from moving in the axial direction.

An alternative or additional embodiment of the stop edge refers to the groove that axially and circumferentially extends on the first core and/or the second core. A side surface of the groove defines the stop edge. The groove may be defined only by the first core or the second core, however it is possible that the side surfaces of the groove are defined by the first core and the second core. In this case, the groove is completed by abutting the first core against the second core. This simplifies the assembly of the stopper on the first core and/or the second core.

The groove may be constituted by a recess in the core. It is also possible that the groove, in particular its side surfaces, are defined by the first body and the second body, in particular the second radial body. For example, the first core and/or the second core may be covered on their outer surfaces with the first body and the second body, respectively, wherein the groove is defined by a recess in or by an absence of the first body and/or the second body.

It is preferred that the first sleeve protrusion also extends radially outward from the first sleeve. Preferably, the first body is attached to the radially outward extending portion of the first sleeve.

In this embodiment, the first sleeve protrusion extends both radially outward and inward from the first sleeve. In particular, the first sleeve abutment surface is arranged both outward and inward from the first sleeve in the radial direction. As such, the first body is attached to the first sleeve protrusion at a location radially outward and inward of the first sleeve. In such an embodiment, the area of the first sleeve abutment surface is increased or, in other words, the first body has an increased thickness in the radial direction. Optionally, the first core protrusion is increased in its extension along the radial direction compared to an embodiment in which the first sleeve protrusion does not extend radially outward from the first sleeve. This is done in order to also increase the first core abutment surface in the radial direction. The increase in the area of the first sleeve abutment surface and/or the first core abutment surface results in an increased stiffness in the axial direction.

The radially outward extending portion of the first sleeve may constitute an abutment edge against which the clamp of the suspension abuts. This helps to position the mount in the clamp of the suspension and provides a means for transmitting axial loads from the mount, in particular the first sleeve, to the clamp of the suspension.

It is preferred that the first core protrusion is arranged axially separated from the first sleeve. Preferably, the second core protrusion is arranged axially separated from the second sleeve and/or the first sleeve.

The first core protrusion preferably constitutes an axial end of the mount. The axial separation between the first core protrusion and the first sleeve, in particular the first sleeve protrusion, is at least filled with the first body. The axial separation of the first core protrusion and the first sleeve allows designing the first core protrusion such that it extends over at the outer diameter of the first sleeve in the radial direction, for example with regard to the radially outward extending portion of the first sleeve protrusion.

Similarly, the second core protrusion is axially separated from the second sleeve, in particular the second sleeve protrusion. The second core protrusion preferably constitutes the other axial end of the mount.

The first body and the second axial body are preferably an annular element. This helps to seal the gap between the first sleeve and the first core as well as the second sleeve and the second core, respectively. However, it is also possible that the first body and the second axial body include circumferentially extending sections which are separated from each other. By setting the distance between each sections and the length of each sections in the circumferential direction, the stiffness of the first body in the second axial body can be adapted.

It is s preferred that the second sleeve is fixed to the first sleeve by a snap-fit connection. Preferably, the snap-fit connection includes at least one projection arranged on one of the first sleeve and the second sleeve and the at least one recess arranged on the other of the first sleeve and the second sleeve. Alternatively or additionally, the snap-fit connection includes at least one projection which is arranged on the first sleeve and abuts against an axial end of the second sleeve.

The snap-fit connection as used herein includes two elements form-lockingly engaged with each other and a resilient component. The two form-lockingly engaged elements are the projection and the recess. They are held in form-locking engagement by the resilient component which is in this case the first body and/or the second body. The projection and/or the recess are arranged on the outer surface of the second sleeve and/or on the inner surface of the first sleeve. Thus, the resilient component, i.e. the first body and/or the second body press the second sleeve against the first sleeve and, thus, the projection into the recess. In this way, a form-locking engagement of the first sleeve with the second sleeve is ensured. The snap-fit connection helps to maintain the assembled state of the mount, i.e. that the second sleeve is securely held in the first sleeve such that the first part is securely fixed to the second part. Preferably, the recess and the projection are arranged close to the axial edge of the first sleeve in the mounted state, such that the projection does not need to be moved along the extension of the first sleeve during the insertion process.

If there is a projection arranged on the first sleeve, the projection is arranged on the inner surface of the first sleeve and projects radially inward towards the first core. The projection may be an annular member extending around the complete circumference of the inner surface of the first sleeve. It is also possible that the projection includes several segments (equally) distributed over the circumference of the inner surface of the first sleeve.

The recess has a shape which corresponds to the shape of the projection. Furthermore, the recess is arranged on the corresponding position of the projection. Thus, the remarks with regard to the projection equally applied to the recess. If the projection is arranged on the outer surface of the second sleeve, the recess is arranged on the inner surface of the first sleeve.

As described above, it is also possible that solely a projection is provided; a recess is not necessary to form a snap-fit connection as the projection interacts with the axial end of the second sleeve. In this case, the projection abuts against the axial end of the second sleeve.

A method for assembling a mount refers to a mount which includes a first part, a second part and a support bar. The first part includes a first core, a first sleeve and a resilient first body, wherein the second part includes a second core, a second sleeve and resilient second body. In particular, the mount includes the features as described above. The method includes the steps of
a) fixing the first body to the first core and to the first sleeve,
b) fixing the second body to the second core and to the second sleeve,
c) inserting the second sleeve into the first sleeve, and
d) arranging the first part and the second part on the support bar.

It is preferred that step d) includes pressfitting the first core and the second core onto the support bar.

The fixation of the first body to the first core and to the first sleeve can be done by vulcanizing or 2K-injection molding the first body to the first core and to the first sleeve. Alternatively, the first body may be fixed to the first core and to the first sleeve by means of adhesion. In a similar way, the second body is fixed to the second core and the second sleeve. Thus, after steps a) and b), the first part and the second part are assembled.

In step c), the first part and the second part are attached to each other in that the second sleeve is inserted into the first sleeve. The end of the insertion process may be noticed by the abutment of the first core against the second core. In a preferred embodiment, the second sleeve also abuts against the edge arranged on the inner surface of the first sleeve. The insertion process may include radially compressing the second sleeve such that the second sleeve can be inserted into the first sleeve. After the completion of the insertion process, the second sleeve radially presses against the inner surface of the first sleeve such that the second sleeve is pressfit into the first sleeve. It is possible that this pressfit force is too weak such that the provision of the snap-fit connection as described above helps to maintain the second sleeve in the first sleeve.

In order to complete the assembly process of the mount, the first part and a second part, in particular the first core and the second core, are pressfit onto the support bar. This is preferably done in that the support bar is inserted into the first core and the second core. Subsequently, the first core and the second core, in particular their respective first section, are plastically deformed such that a pressfit connection between the support bar and the first core as well as the second core is achieved. In this way, the first core and the second core can be reliably attached to the support bar.

Preferably, the stopper is arranged on the first core and/or the second core prior to the insertion of the second sleeve into the first sleeve. In this way, it is ensured that the stopper is reliably held on the first core and/or the second core while the arrangement is easy since the stopper needs only be slid onto the first core and/or the second core.

Preferred embodiments of the invention will be discussed in conjunction with the accompanying drawings. Therein,
- Fig. 1: shows a cross-sectional view of a first embodiment of a mount;
- Fig. 2a: shows an enlarged view of the highlighted portion of Fig. 1;
- Fig. 2b: shows an enlarged view of the highlighted portion of Fig. 1 according to a second embodiment;
- Fig. 3: shows a cross-sectional view of a third embodiment of the mount;
- Fig. 4: shows a cross-sectional view of a fourth embodiment of the mount;
- Fig. 5: shows a cross-sectional view of a fifth embodiment of the mount;
- Fig. 6a: shows a cross-sectional view along the line B-B of Fig. 5;
- Fig. 6b: shows a cross-sectional view along the line A-A of Fig. 5;
- Fig. 7: shows a cross-sectional view of a sixth embodiment of the mount; and
- Fig. 8: shows a cross-sectional view along the line C-C of Fig. 7.

A mount 10 for supporting a suspension (not shown) on a chassis (not shown) includes a first part 12, a second part 14 and a support bar 16. The mount 10 can be pre-assembled such that the first part 12, the second part 14 and the support bar 16 are fixedly attached to each other. Thus, the mount 10 can be attached to the suspension and the chassis as it is.

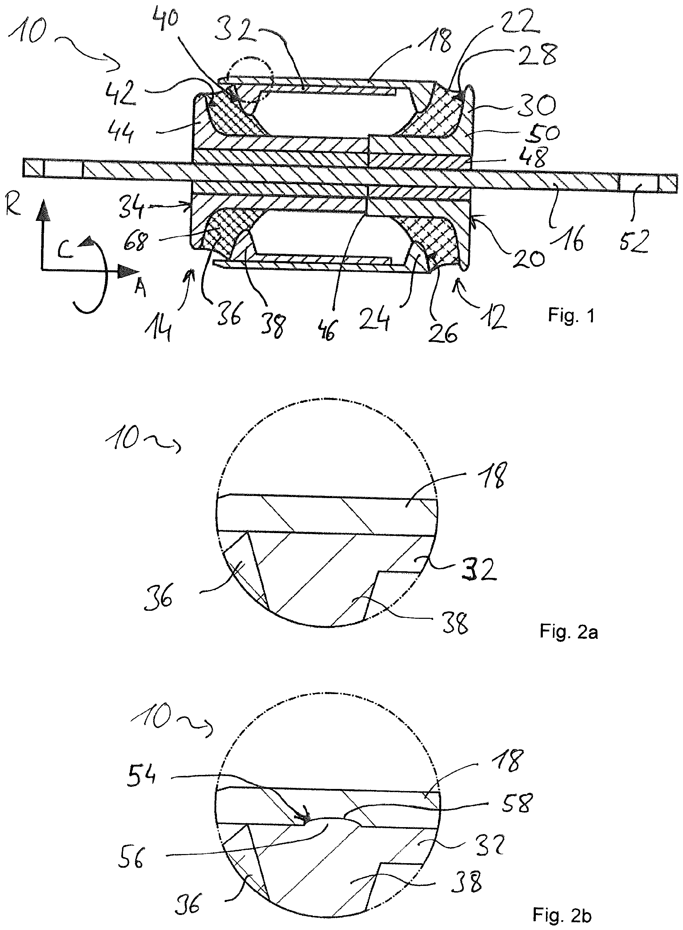

The first part 12 includes a first sleeve 18, a first core 20 and a resilient first body 22 which is fixedly attached to both the first sleeve 18 and the first core 20. A first sleeve protrusion 24 is arranged at an axial end of the first sleeve 18. The first sleeve protrusion 24 radially extends towards the first core 20 (i.e. radially inward) from the first sleeve 18. In the embodiment shown in Fig. 1, the first sleeve 18 exhibits a circular cylindrical shape except the first sleeve protrusion 24. The first sleeve protrusion 24 is an annular protrusion and extends over the whole circumference of the first sleeve 18.

The first sleeve protrusion 24 includes a first sleeve abutment surface 26 which faces a first core abutment surface 28 of the first core 20. The first sleeve abutment surface 26 and the first core abutment surface 28 extend generally in a radial direction R such that a part of the first body 22 is arranged between the first sleeve protrusion 24 and a first core protrusion 30 along a line parallel to an axial direction A. Due to this arrangement, the first body 22 acts as a resilient stopper or cushion in the axial direction A. In the embodiment of Fig. 1, the first body 22 is an annular member.

The first core protrusion 30 extends in the radial direction R outward from the first core 20. The first core 20 exhibits a circular cylindrical outer surface except the first core protrusion 30. The first core protrusion 30 is an annular protrusion.

The second part 14 includes a second sleeve 32, a second core 34 and a resilient second body 36 which is fixedly attached to both the second sleeve 32 and the second core 34. A second sleeve protrusion 38 is arranged at an axial end of the second sleeve 32. The second sleeve protrusion 38 radially extends towards the second core 34 (i.e. radially inward) from the second sleeve 32. In the embodiment shown in Fig. 1, the second sleeve 32 exhibits a circular cylindrical shape except the second sleeve protrusion 38. The second sleeve protrusion 38 is an annular protrusion and extends over the whole circumference of the second sleeve 32.

The second sleeve protrusion 38 includes a second sleeve abutment surface 40 which faces a second core abutment surface 42 of the second core 34. The second sleeve abutment surface 40 and the second core abutment surface 42 extend generally in the radial direction R such that a part of the second body 36 is arranged between the second sleeve protrusion 38 and a second core protrusion 44 along a line parallel to the axial direction A. Due to this arrangement, the second body 36 acts as a resilient stopper or cushion in the axial direction A. In the embodiment of Fig. 1, the second body 36 is an annular member.

The second core protrusion 44 extends in the radial direction R outward from the second core 34. The second core 34 exhibits a circular cylindrical outer surface except the second core protrusion 44. The outer diameter of the cylindrical portion of the second core 34 is smaller than the outer diameter of the cylindrical portion of the first core 20. Thus, a stop edge 46 is formed where the first core 20 abuts against the second core 34. The second core protrusion 44 is an annular protrusion.

The outer surface of the second sleeve 32 is in contact with a portion of the inner surface the first sleeve 18. In particular, the complete outer surface of the second sleeve 32 is in contact with a portion of the inner surface of the first sleeve 18. The second sleeve 32 is pressfit into the first sleeve 18. In this way, the second sleeve 32 is held in the first sleeve 18.

The first sleeve protrusion 24 and the first core protrusions 30 overlap in the radial direction R. This means a radially most inward part of the first sleeve protrusion 24 is arranged closer to the first core 20 than a radially most outward part of the first core protrusion 30. In particular, a line extending parallel to the axial direction A cuts through the first sleeve protrusion 24, the first body 22 and the first core protrusion 30.

Similarly, the second sleeve protrusion 38 and the second core protrusions 44 overlap in the radial direction R. This means, a radially most inward part of the second sleeve protrusion 38 is arranged closer to the second core 34 than a radially most outward part of the second core protrusion 44. In particular, a line extending parallel to the axial direction A cuts through the second sleeve protrusion 38, the second body 36 and the second core protrusion 44. Furthermore, the first protrusion 24, the first core protrusion 30, the second sleeve protrusion 38 and/or the second core protrusion 44 overlap in the radial direction R.

The first core 20 and/or the second core 34 include a first section 48 made from a first material and a second section 50 made from a second material.

The first section 48 is preferably solely in contact with the support by 16. The second section 50 preferably extends over the whole circumference over the first section 48. The first material from which to the first section 48 is made is metal wherein the second material is preferably plastic. The first core protrusion 30 and the second core protrusion 44 are part of the second section 50.

The support bar 16 is an elongated element which projects from the first core 20 and the second core 34 in the axial direction A. The first core 20 and the second core 34 are pressfit onto the support bar 16. The support bar 16 is that member with which the mount 10 is attached to the chassis. To this end, the support bar 16 comprises through-holes 52 at the axial end portions thereof. Fastening elements such as screws and bolts may be inserted into the through-holes 52 for attaching the support bar 16 and, thus, the mount 10 to the chassis.

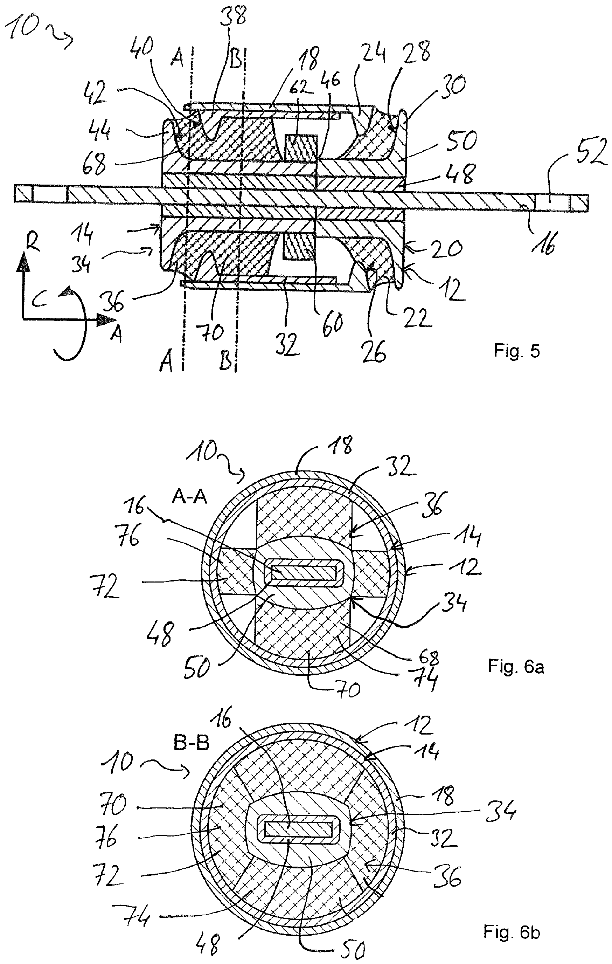

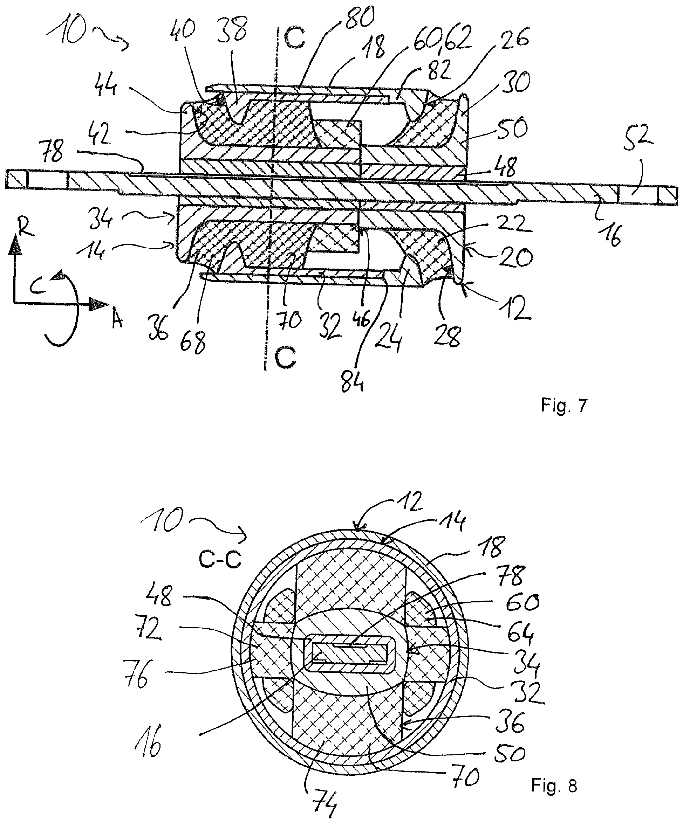

As visible in Figs. 6a, 6b, and 8, the support bar 16 has a length which is greater than the width in a cross-sectional view. The width and the length are preferably measured perpendicular to the outer surface of the support bar 16 at a certain position. The support bar 16 may have a rectangular shape in a cross-sectional view.

Fig. 2a shows an enlarged view of the portion of the mount 10 that is highlighted in Fig. 1 by the circle. Fig. 2b shows the exact same portion however of a different embodiment of the mount 10. In this embodiment, the mount 10 additionally includes a snap-fit connection 54. The snap-fit connection 54 provides an additional means for securely holding the second sleeve 32 in the first sleeve 18. The snap-fit connection 54 of the embodiment of Fig. 2b is provided between the inner surface of the first sleeve 18 and the outer surface of the second sleeve 32. In particular, the snap-fit connection 54 includes a projection 56 and a recess 58. The projection 56 is arranged on the outer surface of the second sleeve 32 while the recess 58 is arranged on the inner surface of the first sleeve 18. The projection 56 has a similar shape as the recess 58. The projection 56 and the recess 58 constitute two form-locking elements of the snap-fit connection 54, while the second body 36 is the resilient element which provides the form-locking engagement of the projection 56 with the recess 58.

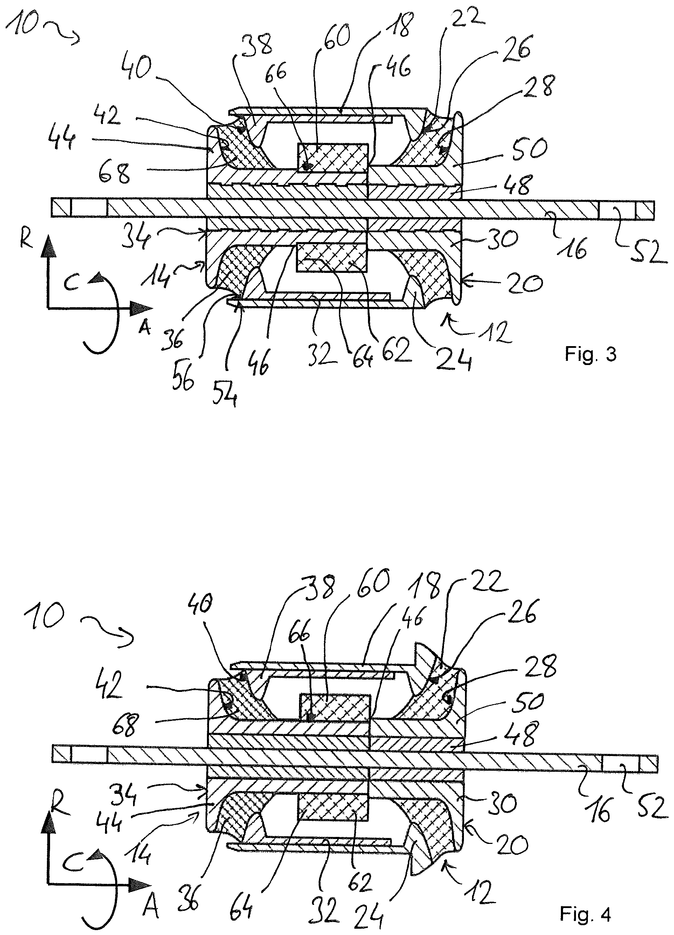

The mount 10 according to the embodiment as shown in Fig. 3 differs from the embodiment of the mount 10 shown in Fig. 1 only in the following features. This means all descriptions of the mount 10 according to Fig. 1 equally apply to the mount 10 according to Fig. 3 if not stated otherwise.

The mount 10 additionally includes a stopper 60. The stopper 60 is provided for limiting the displacement of the second sleeve 32 with regard to the second core 34 in the radial direction R. In this way, unwanted high deformations of the first body 22 and the second body 36 which may lead to a reduction in their lifespan can be avoided. The stopper 60 of the embodiment shown in Fig. 3 is only arranged on the second core 34.

The stopper 60 includes a base portion 62 and at least one arm portion 64. The base portion 62 extends around the second core 34 in the circumferential direction C and, thus, is an annular member. The arm portion 64 extends in the radial direction R from the base portion 62. The arm portion 64 and the base portion 62 are a unitary component made from a plastic material such as polyamide potentially reinforced with glass fibers. The cross-sectional view of Fig. 3 extends over both the base portion 62 and the arm portion 64.

The stopper 60 is prevented from moving in the axial direction A by the stop edge 46. This means the stopper 60 cannot move onto the first core 20.

The mount 10 according to Fig. 3 also exhibits a different embodiment of the snap-fit connection 54. There, the snap-fit connection 54 only includes a projection 56 but no recess 58. The projection 56 extends radially inward from the inner surface of the first sleeve 18. The projection 56 form-lockingly engages with the axial end of the second sleeve 32. This means the axial end of the second sleeve 32 axially abuts against the projection 56.

The stop edges 46 in the embodiment of Fig. 3 are configured as a groove 66 which allows to hold the stopper 60 in opposite axial directions A. The side surfaces of the groove 66, the two stop edges 46, are provided by the difference in the outer diameter of the first core 20 and the second core 34 on the one hand and by the second body 36 on the other hand. In particular, the second body 36 includes a further stop edge 46 which is constituted by portions of the second core 34 having different outer diameter. Thus, the stopper 60 is arranged in the groove 66 which is provided by the two stop edges 46. The stopper 60 is reliably held in the axial direction A in this way.

In the embodiment shown in Fig. 3, the strength of the connection of the first section 48 to the second section 50 in the axial direction A is increased by providing a tongue and groove connection between the two components. For example, a plurality of grooves extending in the circumferential direction C are arranged on the outer surface of the first section 48 which mate with tongues arranged on the inner surface of the second section 50.

The mount 10 according to the embodiment as shown in Fig. 4 differs from the embodiments of the mount 10 shown in Figs. 1 and 3 only in the following features. This means all descriptions of the mount 10 according to Figs. 1 and 3 equally apply to the mount 10 according to Fig. 4 if not stated otherwise.

The first sleeve protrusion 24 of the mount 10 according to Fig. 4 extends both radially inward and radially outward from the first sleeve 18. Thus, the first sleeve protrusion 24 extends from the outer surface of the first sleeve 18. Thus, an abutment edge is formed on the outer surface of the first sleeve 18 which helps to position the mount 10 in the suspension and allows a good transmission of axial forces from the mount 10 to the suspension. In addition, the area of the first sleeve abutment surface 26 is increased compared to the configuration as depicted in Figs. 1 and 3 which allows to increase the axial stiffness of the first body 22. Optionally, the extension of the first core protrusion 30 in the radial direction R is also increased. This results in an increase in the area of the first core abutment surface 28.

The mount 10 according to the embodiment as shown in Fig. 5 differs from the embodiments of the mount 10 shown in Figs. 1, 3 and 4 only in the following features. This means all descriptions of the mount 10 according to Figs. 1, 3 and 4 equally apply to the mount 10 according to Fig. 5 if not stated otherwise.

The second body 36 includes in this embodiment a second axial body 68 and a second radial body 70. The second axial body 68 is arranged between and fixed to the second sleeve abutment surface 40 and the second core abutment surface 42. Thus, the second axial body 68, similar to the first body 22, provides a resilient stopper or cushion for receiving axial loads.

The second radial body 70 is arranged between and fixed to the second core 34 and an inner surface of the second sleeve 32. Thus, the second radial body 70 acts as a spring and/or damper effective in the radial direction R. Furthermore, the second radial body 70 also defines the stop edge 46. The second radial body 70 may include arms 76 that radially extend from the second core 34 to the second sleeve 32. The arms 76 may be separated by gaps or voids in a circumferential direction C. In contrast thereto, the second axial body 68 preferably does not include gaps or voids, however the second axial body 68 may also include arms 76 which extend between the second core protrusion 44 and the second sleeve protrusion 38.

The second axial body 68 and/or the second radial body 70 may include a first material portion 72 and a second material portion 74. In particular, the first material portion 72 constitutes two arms 76 extending in one radial direction R and the second material portion 74 constitutes two arms 76 extending in a different radial direction R. The first material portion 72 and the second material portion 74 provide different damping capabilities in different radial directions R.

The mount 10 according to the embodiment as shown in Fig. 7 differs from the embodiments of the mount 10 shown in Figs. 1, 3, 4 and 5 only in the following features. This means all descriptions of the mount 10 according to Figs. 1, 3, 4 and 5 equally apply to the mount 10 according to Fig. 7 if not stated otherwise.

The support bar 16 is preferably manufactured by stamping, embossing or cutting a metal sheet, such as steel sheet, iron sheet, flat steel or any other plate.

The support bar 16 includes an embossment 78 which preferably extends in the axial direction A. The embossment 78 is provided for increasing the strength of the support bar 16. As particularly visible from Fig. 8, the embossment 78 leads to a deviation of the shape of the support bar 16 from the rectangle in the cross-sectional view. However, the width and the length are not changed by the embossment 78. The embossment 78 protrudes from the first core 20 and the second core 34.

As visible in Fig. 8, the arm portion 64 of the stopper 60 extends into the gaps or voids arranged between the arms 76 of the second radial body 70. The arm portion 64 is thus engaged with the second radial body 70. This prevents a rotation of the stopper 60 on the first core 20 and/or the second core 34.

As visible in Fig. 7, the first sleeve 18 includes a first portion 80 and a second portion 82 wherein the first portion 80 includes a first inner diameter and the second portion 82 includes a second inner diameter. The first portion 80 and the second portion 82 are arranged in the axial direction A. Preferably, the first sleeve 18 solely includes the first portion 80 and the second portion 82. The first inner diameter and/or the second inner diameter of the first portion 80 and the second portion 82, respectively, refer to the maximum distance between the inner surface of the first sleeve 18 at the first portion 80 and the second portion 82. In case of a sleeve 18 having a circular cylindrical inner surface, the first inner diameter and the second inner diameter correspond to the diameter in a mathematical sense. The inner diameter of the first portion 80 and the second portion 82 preferably remains constant within the extension of the first portion 80 and the second portion 82.

The transition between the first portion 80 and the second portion 82 can be constituted by an edge 84 as depicted in Fig. 7. However, other transitions between the first portion 80 and the second portion 82 are possible. Preferably, an axial end of the second sleeve 32 abuts against the edge 84. In this case, the edge 84 helps to position the second sleeve 32 within the first sleeve 18 during the assembly process. Furthermore, the edge 84 may contribute to transmitting an axial load acting on the mount 10 from the first sleeve 18 to the second sleeve 32 and vice versa.

In the following, a method of assembling the mount 10 will be discussed. Firstly, the first part 12 is manufactured by fixing, preferably vulcanizing, the first body 22 to the first sleeve 18 and the first core 20. At the same time or afterwards, the second part 14 is manufactured by fixing, preferably vulcanizing, the second body 36 to the second sleeve 32 and the second core 34. Thus, all components of the first part 12 and of the second part 14 (including the optional stopper 60) are fixed to each other such that the first part 12 and the second part 14 are pre-assembled units. In a second step, the first part 12 is attached to the second part 14 by inserting the second sleeve 32 into the first sleeve 18. To this end, the second sleeve 32 may be radially compressed for the insertion process. The insertion movement is done until the second core 34 abuts against the first core 20. After that, the radial compression is released such that the second sleeve 32 is pressfit against the first sleeve 18. Furthermore, by the release of the radial compression, the snap-fit connection 54 is in engagement such that the projection 56 and the recess 58 define a form-locking connection. In a final step, the first part 12 and the second part 14 are pressfit onto the support bar 16. In particular, the first core 20 and the second core 34 are pressfit onto the support bar 16. As a consequence, the mount 10 is a pre-assembled part whose components are securely fixed to each other.

### List of Reference Signs

| | | | |
|---|---|---|---|
| 10 | mount | 60 | stopper |
| 12 | first part | 62 | base portion |
| 14 | second part | 64 | arm portion |
| 16 | support bar | 66 | groove |
| 18 | first sleeve | 68 | second axial body |
| 20 | first core | 70 | second radial body |
| 22 | first body | 72 | first material portion |
| 24 | first sleeve protrusion | 74 | second material portion |
| 26 | first sleeve abutment surface | 76 | arm |
| 28 | first core abutment surface | 78 | embossment |
| 30 | first core protrusion | 80 | first portion |
| 32 | second sleeve | 82 | second portion |
| 34 | second core | 84 | edge |
| 36 | second body | A | axial direction |
| 38 | second sleeve protrusion | C | circumferential direction |
| 40 | second sleeve abutment surface | R | radial direction |
| 42 | second core abutment surface | | |
| 44 | second core protrusion | | |
| 46 | stop edge | | |
| 48 | first section | | |
| 50 | second section | | |
| 52 | through-hole | | |
| 54 | snap-fit connection | | |
| 56 | projection | | |
| 58 | recess | | |

## Claims

1. A mount for supporting a suspension on a chassis, comprising
a first part (12) including a first core (20), a first sleeve (18) and a resilient first body (22),
a second part (14) including a second core (34), a second sleeve (32) and a resilient second body (36),
wherein the first core (20) includes a first core protrusion (30) extending radially outward from the first core (20),
wherein the first sleeve (18) includes a first sleeve protrusion (24) extending radially inward from the first sleeve (18),
wherein a radially most inward part of the first sleeve protrusion (24) is positioned closer to the first core (20) than a radially most outward part of the first core protrusion (30),
wherein the first body (22) is fixed to the first core protrusion (30) and to the first sleeve protrusion (24) for providing a spring in an axial direction (A) of the mount (10),
wherein the second body (36) is fixed to the second core (34) and to the second sleeve (32), and
wherein the second sleeve (32) is, preferably completely, inserted into the first sleeve (18) such that an outer surface of the second sleeve (32) is in contact with an inner surface of the first sleeve (18) **characterized in that** the second core (34) includes a second core protrusion (44) extending radially outward from the second core (34),
wherein the second sleeve (32) includes a second sleeve protrusion (38) extending radially inward from the second sleeve (32),
wherein a radially most inward part of the second sleeve protrusion (38) is positioned closer to the second core (34) than a radially most outward part of the second core protrusion (44), and
wherein preferably a radially most inward part of the first sleeve protrusion (24) is positioned closer to the first core (20) than a radially most outward part of the second core protrusion (44).

2. The mount according to claim 1, **characterized in that** the second body (36) includes a second axial body (68) and a second radial body (70),
wherein preferably the second axial body (68) is fixed to the second core protrusion (44) and to the second sleeve protrusion (38) for providing a spring in the axial direction (A), and
wherein further preferably the second radial body (70) is fixed to an outer surface of the second core (34) and to an inner surface of the second sleeve (32) for providing a spring in the radial direction (R).

3. The mount according to any one of the preceding claims, **characterized by** a support bar (16) axially protruding from the first core (20) and the second core (34),
wherein preferably the first core (20) and/or the second core (34) are pressfit onto the support bar (16).

4. Mount according to claim 3, **characterized in that** the support bar (16) has, in a cross-sectional view, a width and a length, wherein the length is greater than width,
wherein preferably the support bar (16) includes an embossment (78), and
wherein further preferably the embossment (78) extends in the axial direction (A).

5. The mount according to any one of the preceding claims, **characterized in that** the first core (20) and/or the second core (34) include a first section (48) made from a first material, in particular metal, and a second section (50) made from a second material, in particular plastic,
wherein preferably the first section (48) is in contact with the support bar (16).

6. The mount according to any one of the preceding claims, **characterized in that** the first sleeve (18) includes a first portion (80) having a first inner diameter and a second portion (82) axially separated from the first portion (80) and having a second inner diameter which is smaller than the first diameter,
wherein preferably the outer surface of the second sleeve (32) is in contact with the first portion (80), and
wherein further preferably the first portion (80) and the second portion (82) are separated by an edge (84), the second sleeve (32) axially abutting against the edge (84).

7. The mount according to claim 2, **characterized in that** the second radial body (70) includes a first material portion (72) and a second material portion (74), the first material portion (72) and the second material portion (74) being made from different materials.

8. The mount according to any one of the preceding claims, **characterized by** a stopper (60) which is arranged on the first core (20) and/or the second core (34),
wherein preferably the stopper (60) includes a base portion (62) circumferentially extending around the first core (20) and/or the second core (34) and at least one arm portion (64) axially extending from the base portion (62) into a void arranged in the second radial body (70).

9. The mount according to claim 8, **characterized in that** the first core (20) and/or the second core (34) form a stop edge (46) for preventing the stopper (60) from moving in the axial direction (A),
wherein preferably the stop edge (46) is constituted by different outer diameters of the first core (20) and the second core (34) or
wherein two stop edges (46) constitute a groove (66) axially and circumferentially extending on the first core (20) and/or the second core (34).

10. The mount according to any one of the preceding claims, **characterized in that** the first sleeve protrusion (24) also extends radially outward from the first sleeve (18),
wherein preferably the first body (22) is attached to the radially outward extending portion of the first sleeve protrusion (24).

11. The mount according to any one of the preceding claims, **characterized in that** the first core protrusion (30) is arranged axially separated from the first sleeve (18),
wherein preferably the second core protrusion (44) is arranged axially separated from the second sleeve (32) and/or the first sleeve (18).

12. The mount according to any one of the preceding claims, **characterized in that** the second sleeve (32) is fixed to the first sleeve (18) by a snap-fit connection (54),
wherein preferably the snap-fit connection (54) includes at least one projection (56) arranged on one of the first sleeve (18) and the second sleeve (32) and at least one recess (58) arranged on the other of first sleeve (18) and the second sleeve (32), and/or
wherein the snap-fit connection (54) includes at least one projection (56) which is arranged on the first sleeve (18) and abuts against an axial end of the second sleeve (32).

13. A method for assembling a mount (10) according to any one of the preceding claims,
wherein the mount (10) includes a first part (12), a second part (14) and a support bar (16),
wherein the first part (12) includes a first core (20), a first sleeve (18) and a resilient first body (22),
wherein the second part (14) includes a second core (34), a second sleeve (32) and a resilient second body (36),
wherein the method includes the steps of:
a) fixing the first body (22) to the first core (20) and to the first sleeve (18),
b) fixing the second body (36) to the second core (34) and to the second sleeve (32),
c) inserting the second sleeve (32) into the first sleeve (18), and
d) arranging the first part (12) and the second part (14) on the support bar (16).

14. The method according to claim 13, **characterized in that** step d) includes pressfitting the first core (20) and the second core (34) onto the support bar (16),
wherein preferably a stopper (60) is arranged on the first core (20) or the second core (34) before the second sleeve (32) is inserted into the first sleeve (18).

## Patentansprüche

1. Halterung zur Abstützung einer Aufhängung an einem Fahrgestell, umfassend
einen ersten Teil (12) mit einem ersten Kern (20), einer ersten Hülse (18) und einem elastischen ersten Körper (22),
einen zweiten Teil (14) mit einem zweiten Kern (34), einer zweiten Hülse (32) und einem elastischen zweiten Körper (36),
wobei der erste Kern (20) einen ersten Kernvorsprung (30) aufweist, der sich von dem ersten Kern (20) radial nach außen erstreckt,
wobei die erste Hülse (18) einen ersten Hülsenvorsprung (24) aufweist, der sich von der ersten Hülse (18) radial nach innen erstreckt,
wobei ein radial innerster Teil des ersten Hülsenvorsprungs (24) näher an dem ersten Kern (20) positioniert ist als ein radial äußerster Teil des ersten Kernvorsprungs (30),
wobei der erste Körper (22) an dem ersten Kernvorsprung (30) und an dem ersten Hülsenvorsprung (24) befestigt ist, um eine Feder in einer axialen Richtung (A) der Halterung (10) bereitzustellen,
wobei der zweite Körper (36) an dem zweiten Kern (34) und an der zweiten Hülse (32) befestigt ist, und
wobei die zweite Hülse (32) vorzugsweise vollständig in die erste Hülse (18) eingeführt ist, so dass eine Außenfläche der zweiten Hülse (32) mit einer Innenfläche der ersten Hülse (18) in Kontakt ist, **dadurch gekennzeichnet, dass** der zweite Kern (34) einen zweiten Kernvorsprung (44) aufweist, der sich von dem zweiten Kern (34) radial nach außen erstreckt,
wobei die zweite Hülse (32) einen zweiten Hülsenvorsprung (38) aufweist, der sich von der zweiten Hülse (32) radial nach innen erstreckt,
wobei ein radial innerster Teil des zweiten Hülsenvorsprungs (38) näher an dem zweiten Kern (34) positioniert ist als ein radial äußerster Teil des zweiten Kernvorsprungs (44), und
wobei vorzugsweise ein radial innerster Teil des ersten Hülsenvorsprungs (24) näher am ersten Kern (20) angeordnet ist als ein radial äußerster Teil des zweiten Kernvorsprungs (44).

2. Halterung nach Anspruch 1, **dadurch gekennzeichnet, dass** der zweite Körper (36) einen zweiten axialen Körper (68) und einen zweiten radialen Körper (70) aufweist,
wobei vorzugsweise der zweite axiale Körper (68) an dem zweiten Kernvorsprung (44) und dem zweiten Hülsenvorsprung (38) befestigt ist, um eine Feder in der axialen Richtung (A) bereitzustellen, und
wobei ferner vorzugsweise der zweite radiale Körper (70) an einer Au-ßenfläche des zweiten Kerns (34) und an einer Innenfläche der zweiten Hülse (32) befestigt ist, um eine Feder in der radialen Richtung (R) bereitzustellen.

3. Halterung nach einem der vorhergehenden Ansprüche, **gekennzeichnet durch** einen Stützstab (16), der axial aus dem ersten Kern (20) und dem zweiten Kern (34) herausragt,
wobei vorzugsweise der erste Kern (20) und/oder der zweite Kern (34) auf den Stützstab (16) aufgepresst sind.

4. Halterung nach Anspruch 3, **dadurch gekennzeichnet, dass** der Stützstab (16) in einer Querschnittsansicht eine Breite und eine Länge aufweist, wobei die Länge größer als die Breite ist,
wobei vorzugsweise der Stützstab (16) eine Prägung (78) aufweist, und wobei sich weiter vorzugsweise die Prägung (78) in der axialen Richtung (A) erstreckt.

5. Halterung nach einem der vorhergehenden Ansprüche, **dadurch gekennzeichnet, dass** der erste Kern (20) und/oder der zweite Kern (34) einen ersten Abschnitt (48) aus einem ersten Material, insbesondere Metall, und einen zweiten Abschnitt (50) aus einem zweiten Material, insbesondere Kunststoff, aufweisen,
wobei vorzugsweise der erste Abschnitt (48) in Kontakt mit dem Stützstab (16) ist.

6. Halterung nach einem der vorhergehenden Ansprüche, **dadurch gekennzeichnet, dass** die erste Hülse (18) einen ersten Abschnitt (80) mit einem ersten Innendurchmesser und einen zweiten Abschnitt (82) aufweist, der axial von dem ersten Abschnitt (80) getrennt ist und einen zweiten Innendurchmesser hat, der kleiner als der erste Durchmesser ist,
wobei vorzugsweise die Außenfläche der zweiten Hülse (32) mit dem ersten Abschnitt (80) in Kontakt ist, und
wobei weiter vorzugsweise der erste Abschnitt (80) und der zweite Abschnitt (82) durch eine Kante (84) getrennt sind, wobei die zweite Hülse (32) axial an der Kante (84) anliegt.

7. Halterung nach Anspruch 2, **dadurch gekennzeichnet, dass** der zweite radiale Körper (70) einen ersten Materialabschnitt (72) und einen zweiten Materialabschnitt (74) umfasst, wobei der erste Materialabschnitt (72) und der zweite Materialabschnitt (74) aus unterschiedlichen Materialien hergestellt sind.

8. Halterung nach einem der vorhergehenden Ansprüche, **gekennzeichnet durch** einen Stopfen (60), der auf dem ersten Kern (20) und/oder dem zweiten Kern (34) angeordnet ist,
wobei der Stopfen (60) vorzugsweise einen Basisabschnitt (62), der sich in Umfangsrichtung um den ersten Kern (20) und/oder den zweiten Kern (34) erstreckt, und mindestens einen Armabschnitt (64) aufweist, der sich axial von dem Basisabschnitt (62) in einen im zweiten radialen Körper (70) angeordneten Hohlraum erstreckt.

9. Halterung nach Anspruch 8, **dadurch gekennzeichnet, dass** der erste Kern (20) und/oder der zweite Kern (34) eine Anschlagkante (46) bilden, um den Stopfen (60) an einer Bewegung in axialer Richtung (A) zu hindern,
wobei vorzugsweise die Anschlagkante (46) durch unterschiedliche Außendurchmesser des ersten Kerns (20) und des zweiten Kerns (34) gebildet wird oder
wobei zwei Anschlagkanten (46) eine Nut (66) bilden, die sich axial und in Umfangsrichtung auf dem ersten Kern (20) und/oder dem zweiten Kern (34) erstreckt.

10. Halterung nach einem der vorhergehenden Ansprüche, **dadurch gekennzeichnet, dass** sich der erste Hülsenvorsprung (24) auch radial nach au-ßen von der ersten Hülse (18) erstreckt,
wobei vorzugsweise der erste Körper (22) an dem sich radial nach au-ßen erstreckenden Teil des ersten Hülsenvorsprungs (24) befestigt ist.

11. Halterung nach einem der vorhergehenden Ansprüche, **dadurch gekennzeichnet, dass** der erste Kernvorsprung (30) axial getrennt von der ersten Hülse (18) angeordnet ist,
wobei vorzugsweise der zweite Kernvorsprung (44) axial getrennt von der zweiten Hülse (32) und/oder der ersten Hülse (18) angeordnet ist.

12. Halterung nach einem der vorhergehenden Ansprüche, **dadurch gekennzeichnet, dass** die zweite Hülse (32) durch eine Schnappverbindung (54) an der ersten Hülse (18) befestigt ist,
wobei vorzugsweise die Schnappverbindung (54) mindestens einen Vorsprung (56), der an einer der ersten Hülse (18) und der zweiten Hülse (32) angeordnet ist, und mindestens eine Ausnehmung (58), die an der anderen der ersten Hülse (18) und der zweiten Hülse (32) angeordnet ist, aufweist, und/oder
wobei die Schnappverbindung (54) mindestens einen Vorsprung (56) aufweist, der an der ersten Hülse (18) angeordnet ist und an einem axialen Ende der zweiten Hülse (32) anliegt.

13. Verfahren zur Montage einer Halterung (10) nach einem der vorhergehenden Ansprüche,
wobei die Halterung (10) einen ersten Teil (12), einen zweiten Teil (14) und einem Stützstab (16) umfasst,
wobei der erste Teil (12) einen ersten Kern (20), eine erste Hülse (18) und einen elastischen ersten Körper (22) umfasst,
wobei der zweite Teil (14) einen zweiten Kern (34), eine zweite Hülse (32) und einen elastischen zweiten Körper (36) aufweist,
wobei das Verfahren die folgenden Schritte umfasst:
a) Befestigung des ersten Körpers (22) am ersten Kern (20) und an der ersten Hülse (18),
b) Befestigung des zweiten Körpers (36) am zweiten Kern (34) und an der zweiten Hülse (32),
c) Einsetzen der zweiten Hülse (32) in die erste Hülse (18), und
d) Anordnen des ersten Teils (12) und des zweiten Teils (14) auf dem Stützstab (16).

14. Verfahren nach Anspruch 13, **dadurch gekennzeichnet, dass** Schritt d) das Aufpressen des ersten Kerns (20) und des zweiten Kerns (34) auf den Trägerstab (16) umfasst,
wobei vorzugsweise ein Stopfen (60) auf dem ersten Kern (20) oder dem zweiten Kern (34) angeordnet ist, bevor die zweite Hülse (32) in die erste Hülse (18) eingeführt wird.

## Revendications

1. Support pour soutenir une suspension sur un châssis, comprenant
une première partie (12) comprenant un premier noyau (20), un premier manchon (18) et un premier corps résilient (22),
une deuxième partie (14) comprenant un deuxième noyau (34), un deuxième manchon (32) et un deuxième corps résilient (36),
dans lequel le premier noyau (20) comprend une première protubérance de noyau (30) s'étendant radialement vers l'extérieur du premier noyau (20),
dans lequel le premier manchon (18) comprend une première protubérance de manchon (24) s'étendant radialement vers l'intérieur du premier manchon (18),
dans lequel une partie radialement la plus intérieure de la première protubérance du manchon (24) est positionnée plus près du premier noyau (20) qu'une partie radialement la plus extérieure de la première protubérance du noyau (30),
dans lequel le premier corps (22) est fixé à la première protubérance du noyau (30) et à la première protubérance du manchon (24) pour fournir un ressort dans une direction axiale (A) du support (10),
dans lequel le deuxième corps (36) est fixé au deuxième noyau (34) et au deuxième manchon (32), et
dans lequel le deuxième manchon (32) est, de préférence complètement, inséré dans le premier manchon (18) de sorte qu'une surface extérieure du deuxième manchon (32) est en contact avec une surface intérieure du premier manchon (18) **caractérisé en ce que** le deuxième noyau (34) comprend une deuxième protubérance de noyau (44) s'étendant radialement vers l'extérieur du deuxième noyau (34),
dans lequel le deuxième manchon (32) comprend une deuxième protubérance de manchon (38) s'étendant radialement vers l'intérieur du deuxième manchon (32),
dans lequel une partie radialement la plus intérieure de la deuxième protubérance du manchon (38) est positionnée plus près du deuxième noyau (34) qu'une partie radialement la plus extérieure de la deuxième protubérance du noyau (44), et
dans lequel, de préférence, une partie radialement la plus intérieure de la première protubérance du manchon (24) est positionnée plus près du premier noyau (20) qu'une partie radialement la plus extérieure de la deuxième protubérance du noyau (44).

2. Support selon la revendication 1, **caractérisé en ce que** le deuxième corps (36) comprend un deuxième corps axial (68) et un deuxième corps radial (70),
dans lequel, de préférence, le deuxième corps axial (68) est fixé à la deuxième protubérance du noyau (44) et à la deuxième protubérance du manchon (38) pour fournir un ressort dans la direction axiale (A), et
de préférence, le deuxième corps radial (70) est fixé à une surface extérieure du deuxième noyau (34) et à une surface intérieure du deuxième manchon (32) pour fournir un ressort dans la direction radiale (R).

3. Support selon l'une quelconque des revendications précédentes, **caractérisé par** une barre de support (16) faisant protubérance axialement par rapport au premier noyau (20) et au deuxième noyau (34),
où, de préférence, le premier noyau (20) et/ou le deuxième noyau (34) sont pressés sur la barre de support (16).

4. Support selon la revendication 3, **caractérisé en ce que** la barre de support (16) a, dans une vue en coupe transversale, une largeur et une longueur, la longueur étant supérieure à la largeur,
dans lequel, de préférence, la barre de support (16) comprend un relief (78), et
où, de préférence, le relief (78) s'étend dans la direction axiale (A).

5. Support selon l'une quelconque des revendications précédentes, **caractérisé en ce que** le premier noyau (20) et/ou le deuxième noyau (34) comportent une première section (48) réalisée dans un premier matériau, notamment métallique, et une deuxième section (50) réalisée dans un deuxième matériau, notamment plastique,
où, de préférence, la première section (48) est en contact avec la barre de support (16).

6. Support selon l'une quelconque des revendications précédentes, **caractérisé en ce que** le premier manchon (18) comprend une première partie (80) ayant un premier diamètre intérieur et une deuxième partie (82) séparée axialement de la première partie (80) et ayant un deuxième diamètre intérieur plus petit que le premier diamètre,
dans lequel, de préférence, la surface extérieure du deuxième manchon (32) est en contact avec la première partie (80), et
de préférence, la première partie (80) et la deuxième partie (82) sont séparées par un bord (84), le deuxième manchon (32) venant en butée axiale contre le bord (84).

7. Support selon la revendication 2, **caractérisé en ce que** le deuxième corps radial (70) comprend une première partie en matériau (72) et une deuxième partie en matériau (74), la première partie en matériau (72) et la deuxième partie en matériau (74) étant fabriquées à partir de matériaux différents.

8. Support selon l'une quelconque des revendications précédentes, **caractérisé par** un bouchon (60) qui est disposé sur le premier noyau (20) et/ou le deuxième noyau (34),
où, de préférence, le bouchon (60) comprend une partie de base (62) s'étendant circonférentiellement autour du premier noyau (20) et/ou du deuxième noyau (34) et au moins une partie de bras (64) s'étendant axialement à partir de la partie de base (62) dans un vide aménagé dans le deuxième corps radial (70).

9. Support selon la revendication 8, **caractérisé en ce que** le premier noyau (20) et/ou le deuxième noyau (34) forment un bord de butée (46) pour empêcher le bouchon (60) de se déplacer dans la direction axiale (A),
dans lequel, de préférence, le bord de butée (46) est constitué par des diamètres extérieurs différents du premier noyau (20) et du deuxième noyau (34) ou
dans lequel deux bords d'arrêt (46) constituent une rainure (66) s'étendant axialement et circonférentiellement sur le premier noyau (20) et/ou le deuxième noyau (34).

10. Support selon l'une quelconque des revendications précédentes, **caractérisée en ce que** la première protubérance du manchon (24) s'étend également radialement vers l'extérieur du premier manchon (18),
où, de préférence, le premier corps (22) est fixé à la partie s'étendant radialement vers l'extérieur de la première protubérance du manchon (24).

11. Support selon l'une quelconque des revendications précédentes, **caractérisée en ce que** la première protubérance du noyau (30) est disposée axialement à l'écart du premier manchon (18),
où, de préférence, la deuxième protubérance du noyau (44) est disposée axialement à l'écart du deuxième manchon (32) et/ou du premier manchon (18).

12. Support selon l'une quelconque des revendications précédentes, **caractérisé en ce que** le deuxième manchon (32) est fixé au premier manchon (18) par un raccord encliquetable (54),
dans lequel, de préférence, le raccord encliquetable (54) comprend au moins une protubérance (56) disposée sur l'un du premier manchon (18) et du deuxième manchon (32) et au moins un renfoncement (58) disposé sur l'autre du premier manchon (18) et du deuxième manchon (32), et/ou
dans lequel le raccord encliquetable (54) comprend au moins une protubérance (56) qui est disposée sur le premier manchon (18) et vient en butée contre une extrémité axiale du deuxième manchon (32).

13. Procédé d'assemblage d'un support (10) selon l'une quelconque des revendications précédentes,
dans lequel le support (10) comprend une première partie (12), une deuxième partie (14) et une barre de support (16),
dans lequel la première partie (12) comprend un premier noyau (20), un premier manchon (18) et un premier corps résilient (22),
dans lequel la deuxième partie (14) comprend un deuxième noyau (34), un deuxième manchon (32) et un deuxième corps résilient (36),
dans lequel de procédé comprend les étapes suivantes
a) fixer le premier corps (22) au premier noyau (20) et au premier manchon (18),
b) fixer le deuxième corps (36) au deuxième noyau (34) et au deuxième manchon (32),
c) insérer le deuxième manchon (32) dans le premier manchon (18), et
d) disposer la première partie (12) et la deuxième partie (14) sur la barre de support (16).

14. Procédé selon la revendication 13, **caractérisée en ce que** l'étape d) comprend l'assemblage par pression du premier noyau (20) et du deuxième noyau (34) sur la barre de support (16),
où, de préférence, un bouchon (60) est placé sur le premier noyau (20) ou le deuxième noyau (34) avant que le deuxième manchon (32) ne soit inséré dans le premier manchon (18).
